(19) Europäisches Patentamt
European Patent Office
Office européen des brevets

(11) **EP 1 309 206 A2**

(12) **EUROPÄISCHE PATENTANMELDUNG**

(43) Veröffentlichungstag:
07.05.2003  Patentblatt 2003/19

(51) Int Cl.7: **H04N 17/00**

(21) Anmeldenummer: 02022619.7

(22) Anmeldetag: 09.10.2002

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **31.10.2001  DE 10153237**

(71) Anmelder: **LFK-Lenkflugkörpersysteme GmbH
85716 Unterschleissheim (DE)**

(72) Erfinder:
- **Barth, Jochen, Dr.
  85764 Oberschleissheim (DE)**
- **Assel, Michael, Dr.
  85221 Dachau (DE)**
- **Polin, Yvonne
  71263 Weil der Stadt (DE)**

(74) Vertreter: **Hummel, Adam
  EADS Deutschland GmbH,
  LG-PM - Patente
  81663 München (DE)**

(54) **Verfahren und Vorrichtung zur automatisierten Bestimmung der Modulations-Transfer-Funktion von Focal-Plane-Array-Kameras**

(57) Es wird ein Verfahren zur automatisierten Bestimmung der Modulations-Transfer-Funktion (MTF) von Focal-Plane-Array(FPA)-Kameras vorgeschlagen, bei dem mittels eines Testgitters, dessen Abbild in der Detektorebene eine Ortsfrequenz aufweist, die gegenüber der Nyquistfrequenz des Detektor-Arrays verstimmt ist, eine Schwebung erzeugt wird, deren Amplitude der zu messenden Amplitude des Gitter-Abbildes ohne Sampling-MTF entspricht, wobei das Testgitter einen Bereich von wenigstens einer halben Schwebungsperiode überdeckt wird, und dann daraus unabhängig von der aktuellen Phasenlage die Modulationamplitude ermittelt wird.

Es werden damit vergleichende MTF-Messungen ohne Einfluß des Sampling-Effekts eines FPA's und insbesondere die MTF-Messung in Echtzeit, geeignet zur Anwendung auf bewegte Bilder ermöglicht.

Fig 1.1: Sinusschwebung

■ = Grauwerte der Pixel

EP 1 309 206 A2

**Beschreibung**

Die Erfindung betrifft ein Verfahren zur automatisierten Bestimmung der Modulations-Transfer-Funktion (MTF) von Focal-Plane-Array(FPA)-Kameras und Vorrichtungen zu seiner Durchführung.

Zur Bestimmung der MTF sind verschiedene Meßmethoden bekannt, beispielsweise aus Vollmershausen und Driggers, Analysis of Sampled Imaging Systems, Bellingham, Washington 2000.

Herkömmliche Techniken setzen statische Abbildung der benutzten Teststruktur auf die Detektorebene voraus.

Es ist jedoch wünschenswert, die Messung der Modulations-Transfer-Funktion MTF von Focal-Plane-Array (FPA) Kameras in Echtzeit vornehmen zu können. Diese Meßmethode ist vorteilhaft anwendbar insbesondere bei bewegter Kamera, bei bewegter Szene oder bei der Messung des Reststabilisierungsfehlers unter Vibrationsanregung.

Gemäß der Erfindung wird dies durch die Maßnahmen gemäß dem kennzeichnenden Teil des Anspruchs 1 erreicht. Es werden damit vergleichende MTF-Messungen ohne Einfluß des Sampling-Effekts eines FPA's und insbesondere die MTF-Messung in Echtzeit, geeignet zur Anwendung auf bewegte Bilder ermöglicht.

Einzelheiten ergeben sich aus den Unteransprüchen und der Beschreibung, in der die theoretischen Grundlagen, die angewandte Meß- und Auswertungsmethoden und die Ergebnisse näher erläutert werden. Es zeigen

Fig. 1.1      allgemein eine Sinusschwebung

Fig. 1.2      Schwebungsanteile in der Nähe der halben Nyquist-Frequenz

Fig. 2.1      Die Ausrichtung des verwendeten Schwebungsgitters

Fig. 2.2      das Schwebungsgitter mit Abstandsmarken

Fig. 2.3      die grafische Darstellung des Sinus- bzw. Cosinus-Fit's

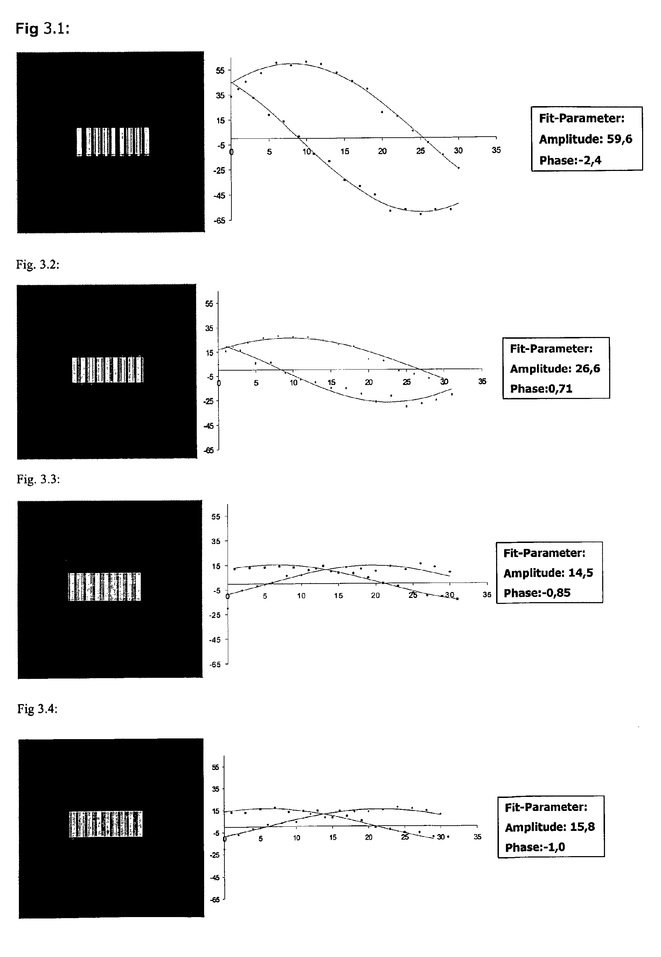

Fig. 3.1-4      Meßergebnisse mit verschiedenen Fit-Parametern.

**Theoretische Betrachtung**

Wird ein Testgitter in die Detektorebene abgebildet, so entsteht dort eine Intensitätsverteilung, deren periodischer Verlauf f(x) hier durch eine Sinusfunktion beschrieben werden soll:

$$f(x) = \sin\left(\frac{2\pi}{P} * x\right) \qquad\qquad \text{Gl.(1.1)}$$

Die Koordinate x ist senkrecht zu den Gitterspalten orientiert, und P gibt die Periodenlage an. Die Intensitätsverteilung wird von einzelnen Detektorelementen an diskreten Punkten abgetastet, so dass

$$f(x_n) = \sin\left(\frac{2\pi}{P} * x_n\right) \qquad\qquad \text{Gl.(1.2)}$$

den Funktionswert bezeichnet, der vom n- ten Detektorelement am Ort $x_n$ gemessen wird.

Entspricht die Ortsfrequenz der abgebildeten Gitterstruktur genau der Nyquistfrequenz des Detektors, so hat man 2 Detektorelemente pro Periode, also

$$x_n = n * \frac{P}{2} \text{ (für Nyquistgitter!)} \qquad\qquad \text{Gl.(1.3)}$$

Da die Frequenz des abgebildeten Gitters aber leicht gegenüber der Nyquistfrequenz des Detektors verstimmt sein soll, wird ein Summand Δ hinzugefügt, der die Größe der Verstimmung angibt:

$$x_n = n * \left(\frac{P}{2} + \Delta\right) \qquad\qquad \text{Gl.(1.4)}$$

Durch Einsetzen von Gl.(1.4) in Gl.(1.2) erhält man

$$f(x_n) = \sin(n\pi + n * \frac{2\pi * \Delta}{P})$$
$$= \sin(n\pi) * \cos(\frac{2\pi * \Delta}{P} * n) + \cos(n\pi) * \sin(\frac{2\pi * \Delta}{P} * n) \qquad \text{Gl.(1.5)}$$

Da n die der Anzahl der Detektorelemente entspricht und somit nur ganzzahlige Werte annimmt, ist der Faktor $\sin(n\pi)$ stets gleich 0, während der Faktor $\cos(n\pi)$ abwechselnd gleich +1 und -1 ist. Daher kann man Gl.(1.5) verein-fachen zu

$$f(x_n)=(-1)^n \sin(\frac{2\pi}{P^*} * n) \qquad \text{mit:} \qquad P^* = \frac{P}{\Delta} \qquad \text{Gl.(1.6)}$$

Dieses Ergebnis lässt sich so interpretieren, dass die Detektorelemente einen periodischen Verlauf der Intensität mit der Periode P* messen, die von der Größe der "Verstimmung" abhängt. Dieses Verhalten kann man als "Schwebung" bezeichnen, und die Schwebungsfrequenz ist

$$\nu = \frac{1}{(2\pi P^*)}.$$

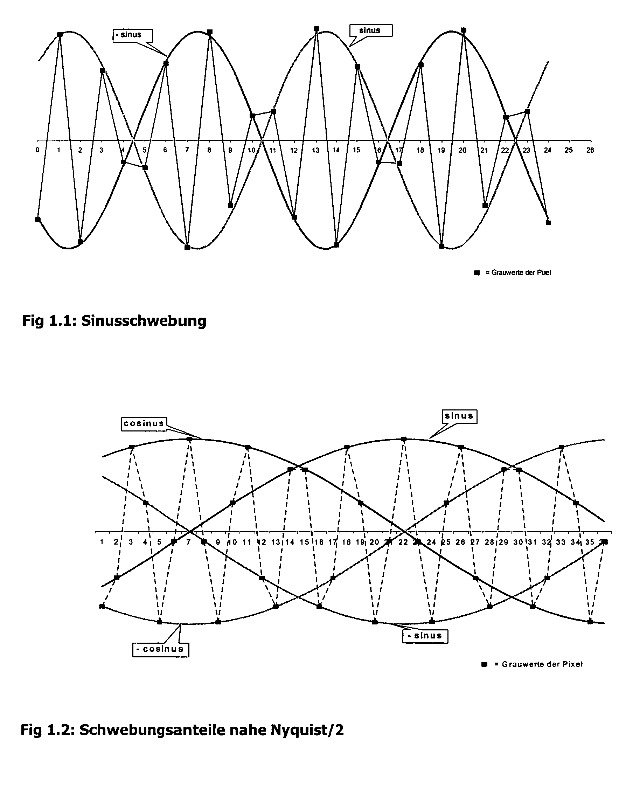

Abbildung 1.1 zeigt als Beispiel eine Messung mit einem gegenüber der Nyquistfrequenz "verstimmten" Gitter, die Periode der Schwebung beträgt etwa 12 Pixel. Dieses Messbeispiel zeigt auch, dass die Messwerte der Intensitäten in Übereinstimmung mit der Gleichung 1.6 abwechselnd auf einer positiven und einer negativen Sinusfunktion liegen.
Wichtig ist, dass die Amplitude der Schwebung genau der Amplitude entspricht, die man bei optimaler Phasenlage des abgebildeten Gitters mißt. Indem man also aus den Messwerten durch einen Fit die Schwebungsfunktion Gl.(1.6) rekonstruiert und die Amplitude als anpassbaren Parameter einführt, erhält man die gesuchte Amplitude der Intensitätsmodulation, auch ohne die optimale Phasenlage tatsächlich einzustellen.
Bei einer Schwebung nahe der halben Nyquistfrequenz ist die Auswertung etwas komplizierter, weil man statt 2 Samples jetzt 4 Samples pro Periode hat, d.h. auf ein Linienpaar des Gitters fallen 4 Detektorelemente (2 pro Spalt). Aus den zwei Schwingungsanteilen bei der Nyquistfrequenz werden so 4 Anteile, die zusätzlich zu den Sinus- Schwingungen noch die positive und negative Cosinus-Schwingung beinhalten.
Setzt man die diskreten Abtastpunkte

$$x_n = n * (\frac{P}{4} + \Delta) \qquad \text{Gl.(1.7)}$$

in Gl.(1.2) ein, so ergibt sich :

$$f(x_n) = \sin(n * \frac{\pi}{2} + n * \frac{2\pi * \Delta}{P}) \qquad \text{Gl.(1.8)}$$

$$= \sin(n * \frac{\pi}{2}) \cos(\frac{2\pi * \Delta}{P} * n) + \cos(n * \frac{\pi}{2}) \sin(\frac{2\pi * \Delta}{P} * n) \qquad \text{Gl.(1.9)}$$

Daraus ergibt sich folgende Fallunterscheidung:

**Fall1: Die Sinus- Anteile**

$$n = 0,2,4,...=2\nu : \qquad f(x_{2\nu}) = (-1)^\nu \sin(\frac{2\pi}{P^*} * 2\nu) \qquad \text{Gl.(1.10)}$$

$$\text{mit: } P^* = \frac{P}{\Delta} = \text{Periodizität in n, d.h. Pixelzahl}$$

oder:

$$f_{(0,4,..)} = \sin(\frac{2\pi}{P^*} * n) \qquad \text{Gl.(1.11)}$$

$$f_{(2,6,..)} = -\sin(\frac{2\pi}{P^*} * n) \qquad \text{Gl.(1.12)}$$

**Fall2: die Cosinus- Anteile:**

$$n = 1,3,5,..=2\nu+1: \qquad f(x_{2\nu+1}) = (-1)^{\nu}\cos(\frac{2\pi}{P^*} * (2\nu+1)) \qquad \text{Gl.(1.13)}$$

oder:

$$f_{(1,5,..)} = \cos(\frac{2\pi}{P^*} * n) \qquad \text{Gl.(1.14)}$$

$$f_{(3,7,..)} = -\cos(\frac{2\pi}{P^*} * n) \qquad \text{Gl.(1.15)}$$

Abbildung 1.2 zeigt 4 Schwebungsanteile für ein gerechnetes Beispiel mit einer Schwebungsperiode von 32 Pixeln.

Jedes gerade Pixel repräsentiert abwechselnd die positive oder die negative Sinus- Schwingung und jedes ungerade Pixel abwechselnd die positive oder die negative Cosinus- Schwingung. Dies hat zur Folge, dass die Anzahl der Pixel bzw. der Grauwerte pro Schwingungsanteil nur noch ein Viertel der Gesamtzahl beträgt.

**Die Auswertesoftware**

Die Software muss in der Lage sein, den Bereich des Detektorchips auszulesen, auf den ein repräsentativer Intensitätsverlauf des Schwebungsgitters abgebildet ist, und aus dem daraus entstehenden Grauwertverlauf die MTF zu berechnen.

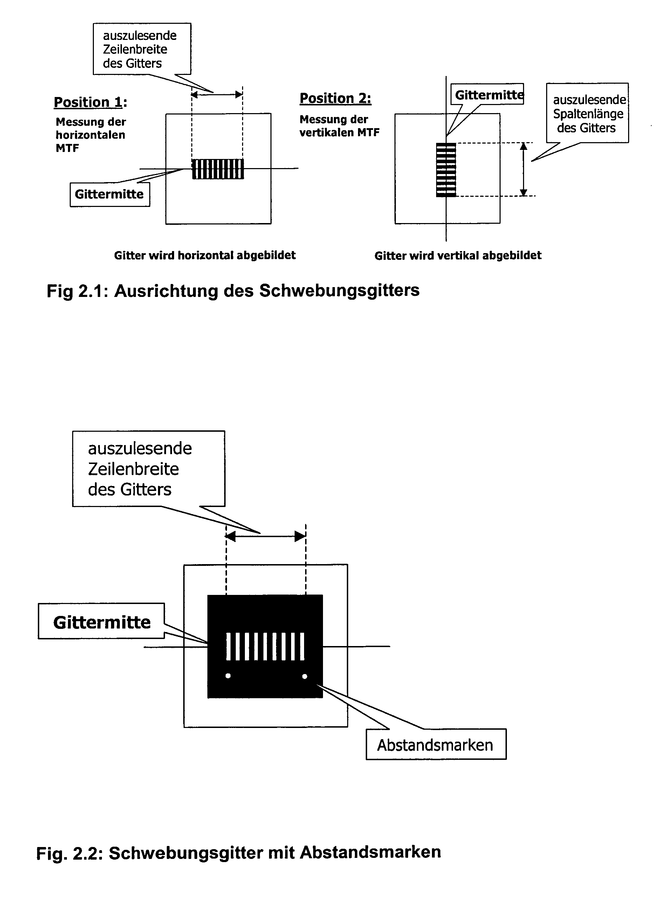

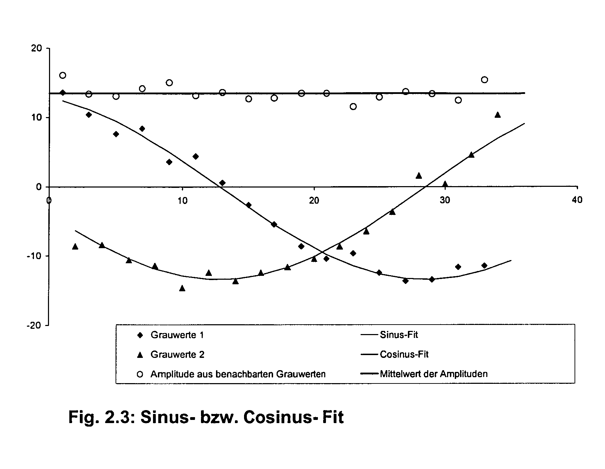

Wenn sich das Abbild des Testgitters in der Detektorebene während der Integrationszeit des Detektor verschiebt, etwa durch die Vibrationen, die auf die Kamera einwirken, muss für jedes Einzelbild bekannt sein, wo sich das Gitter gerade befindet. Da die MTF der Kamera sowohl in der horizontalen als auch in der vertikalen Achse untersucht werden soll, kann die Gitterstruktur horizontal oder vertikal ausgerichtet sein, siehe Abbildung 2.1. Auch dies soll vom Programm automatisch erkannt werden.

**Verfolgung und Auslesen der Gitterzeile**

Es werden zwei Marken neben dem Gitter angebracht, realisiert durch zwei Löcher, die die Länge der Gitterstruktur angeben und einen definierten Abstand von der Gittermitte haben, siehe Abbildung 2.2. Die Löcher der Marken erscheinen im Bild als helle Punkte, da die Heizplatte durch die Löcher hindurch sichtbar wird.

Die Software wurde so erstellt, dass in jedem Einzelbild nach dem hellsten Grauwert in einem definierten Bereich von Pixeln um die Position der Marken aus dem vorhergehenden Einzelbild gesucht wird. Der Suchbereich muß ausreichend sein, um die in der Praxis auftretenden Sprünge von Bild zu Bild abzudecken, etwa unter Vibrationsanregung der Kamera.

Ist die aktuelle Position der Marken gefunden, wird damit die Zeile bzw. Spalte bestimmt, auf die die Gittermitte abgebildet ist, und ausgelesen.

**Bestimmung der MTF mittels Schwebungsgitter**

**A) MIN-MAX- Methode:**

Es wird innerhalb einer Zeile bzw. Spalte der Grauwertverlauf des Abbildes eines Gitters ausgelesen und dann der minimale und maximale Grauwert bestimmt. Die Differenz zwischen Minimal- und Maximalwert entspricht dem übertragenen Kontrast.

Diese Methode liefert einen systematischen Fehler, wenn die Grauwerte so liegen, dass sie nicht das Maximum bzw. Minimum der Schwebungsamplitude erfassen. Die Anwesenheit von Rauschen verfälscht den ermittelten Amplitudenwert zusätzlich.

**B) Sinus- Fit**

Man bestimmt aus den gemessenen Grauwerten den Mittelwert und subtrahiert ihn von allen Meßwerten. Dann sortiert man die so umgerechneten Meßwerte entsprechend Gl.(1.10) und Gl.(1.13), so dass jeweils die Hälfte aller Meßwerte für den Sinus- Fit und den Cosinus- Fit zur Verfügung steht. Dabei ist auch zu berücksichtigen, dass in jeder Gruppe das Vorzeichen jedes zweiten Messwertes invertiert werden muss.

Dieses Verfahren ist genauer als die Min-Max- Methode, und man erhält außer der Amplitude auch eine Aussage über die Phase.

**C) Direkte Amplitudenbestimmung**

Da sich bei Messungen nahe der halben Nyquistfrequenz die Grauwerte auf eine Sinus- und eine Cosinusfunktion mit gleicher Amplitude aufteilen, läßt sich diese Amplitude auch ohne Fit direkt ermitteln, indem man die Beziehung

$$\sin^2 \square + \cos^2 \square \square \textsf{I}$$

ausnutzt. Subtrahiert man von den gemessenen Grauwerten den Mittelwert analog zu Punkt B), dann ergibt die Quadratsumme der Grauwerte je zweier benachbarter Pixel das Quadrat der Modulationsamplitude, allerdings behaftet mit einem Fehler, da die Meßwerte, die der Sinus- und der Cosinusfunktion zuzuordnen sind, zueinander versetzt sind. Der Fehler ist um so kleiner, je größer die Anzahl der Meßwerte pro halber Periode der Sinus- bzw. Cosinusfunktion ist. Bei Mittelung der so erhaltenen Amplitudenwerte über eine halbe Periodenlänge oder ein ganzzahliges Vielfaches davon verschwindet der Fehler exakt.

**Veranschaulichung der Messmethode anhand einer Bildsequenz**

Zur Veranschaulichung der Methode wird die MTF-Messung an einer vibrierenden Kamera anhand der BildsequenzFig. 3.1 bis 3.4 dargestellt. Die einzelnen Bilder sind per "Screen-Shot" erstellt worden, dazu werden die Amplitudenwerte gezeigt und die zugehörigen Fit-Kurven nach der oben erläuterten Methode B).

Diese Bildsequenz zeigt die Möglichkeiten der vorgeschlagenen MTF-Messmethode: obwohl sich von Einzelbild zu Einzelbild Lage und Auflösung des abgebildeten Testgitters ändert, kann für jedes Einzelbild aus dem Fitparameter "Amplitude" der übertragene Kontrast und damit die MTF ermittelt werden. Im gezeigten Beispiel ergeben sich Unterschiede in den Amplituden bis zu einem Faktor 4. Die Korrelation mit der Bildauflösung der Screen-Shots ist evident. Der Grund für so drastische Unterschiede ist eine rauschförmige Vibrationsanregung der Kamera und dadurch eine zufällige Verteilung der Kamera-Auslenkungen während einer Einzelbildbelichtung.

**Patentansprüche**

**1.** Verfahren zur automatisierten Bestimmung der Modulations-Transfer-Funktion (MTF) von Focal-Plane-Array(FPA) -Kameras, **dadurch gekennzeichnet, daß** mittels eines Testgitters, dessen Abbild in der Detektorebene eine Ortsfrequenz aufweist, die gegenüber der Nyquistfrequenz des Detektor-Arrays verstimmt ist, eine Schwebung erzeugt wird, deren Amplitude der zu messenden Amplitude des Gitter-Abbildes ohne Sampling-MTF entspricht, wobei das Testgitter einen Bereich von wenigstens einer halben Schwebungsperiode überdeckt wird, und dass daraus unabhängig von der aktuellen Phasenlage die Modulationamplitude ermittelt wird.

**2.** Verfahren nach Anspruch 1, **dadurch gekennzeichnet, daß** innerhalb einer Zeile bzw. Spalte der Grauwertverlauf des Abbildes des Gitters ausgelesen und dann der minimale und maximale Grauwert bestimmt wird, wobei die Differenz zwischen Minimal- und Maximalwert entspricht dem übertragenen Kontrast entspricht.

3. Verfahren nach Anspruch 1, **dadurch gekennzeichnet, daß** aus den gemessenen Grauwerten der Mittelwert bestimmt und von allen Messwerten subtrahiert wird, dass anschließend die so umgerechneten Meßwerte entsprechend Gl.(1.10) und Gl.(1.13) sortiert werden, so dass jeweils die Hälfte aller Meßwerte für den Sinus- Fit und den Cosinus- Fit zur Verfügung stehen, wobei in jeder Gruppe das Vorzeichen jedes zweiten Messwertes invertiert wird.

4. Verfahren nach Anspruch 1, **dadurch gekennzeichnet, dass** die Amplitude ohne Fit direkt ermittel wird,.indem von den gemessenen Grauwerten der Mittelwert subtrahiert wird und die Quadratsumme der Grauwerte je zweier benachbarter Pixel das Quadrat der Modulationsamplitude ergibt, und daß die so erhaltenen Amplitudenwerte über eine halbe Periodenlänge oder ein ganzzahliges Vielfaches davon gemittelt werden.

5. Vorrichtung zur Durchführung des Verfahrens nach einem der vorhergehenden Ansprüche, **dadurch gekennzeichnet, daß** das Testgitter Abstandsmarken aufweist, deren Abstand der Länge der Gitterstruktur entspricht.

Fig 1.1: Sinusschwebung

Fig 1.2: Schwebungsanteile nahe Nyquist/2

auszulesende
Zeilenbreite
des Gitters

**Position 1:**

Messung der
horizontalen
MTF

Gittermitte

Gitter wird horizontal abgebildet

**Position 2:**

Messung der
vertikalen MTF

Gittermitte

auszulesende
Spaltenlänge
des Gitters

Gitter wird vertikal abgebildet

**Fig 2.1: Ausrichtung des Schwebungsgitters**

auszulesende
Zeilenbreite
des Gitters

**Gittermitte**

Abstandsmarken

**Fig. 2.2: Schwebungsgitter mit Abstandsmarken**

**Fig. 2.3: Sinus- bzw. Cosinus- Fit**

**Fig** 3.1:

Fit-Parameter:
Amplitude: 59,6
Phase:-2,4

Fig. 3.2:

Fit-Parameter:
Amplitude: 26,6
Phase:0,71

Fig. 3.3:

Fit-Parameter:
Amplitude: 14,5
Phase:-0,85

Fig 3.4:

Fit-Parameter:
Amplitude: 15,8
Phase:-1,0